# EUROPEAN PATENT APPLICATION

(11) **EP 2 738 722 A1**
(43) Date of publication of application: **04.06.2014**
(21) Application number: 13184276.7
(22) Date of filing: 13.09.2013
(51) Int. Cl.: G06Q 20/02, G06Q 20/12, G06Q 20/32, G06Q 20/38

(54) **Method and system for providing secure end-to-end authentication and authorization of electronic transactions**

(30) Priority: 29.11.2012 IN CH49932012
(71) Applicant: Cognizant Technology Solutions India Pvt. Ltd., Chenni - 600 097 Tamil Nadu (IN)
(72) Inventor: Leevendig, Frank, Nieuwegein (NL); Kapoor, Shishir, 1054 KJ Amsterdam (NL); Angamuthu, Vigneshwaran, Chennai 600 100 (IN)
(74) Representative: Delorme, Nicolas

(57) **Abstract**

A method and system for performing secure end-to-end authentication of an electronic transaction initiated by a user using a user device is provided. At least one secret element comprising payload data encrypted using at least two cryptographic keys is generated and transmitted to the user device. An image of the at least one secret element is captured and analyzed by an authentication device. The image is analyzed to extract the payload data by decrypting the payload data using at least two cryptographic keys. Geolocation of the user device and the authentication device is determined if the extracted payload data is associated with a unique URL including a string. Based on the determination, a secure page displayed on the authentication is accessed using the unique URL. Finally, the transaction is processed after verification of the transaction details on the secure page and the transaction is confirmed.

## Description

### Field of the invention

The present invention relates generally to the field of authenticating various transactions related to products and services initiated by a user and more specifically to a method and system for providing secure end-to-end authentication of electronic transactions via a user's securely signed handheld device.

### Background of the invention

Nowadays, users are increasingly using electronic media as a preferred mode for carrying out various transactions of products and services. For example, online shopping is widely used by users which involve steps of registration, ordering of products or services, transaction, verification etc. via a merchant's website, a retail premise or various physical displays such as billboard etc. Privacy and authentication of user details is a vital necessity for any transaction related activity. For privacy and authentication procedures, the user places personal details including, but not limited to, passwords, credit card numbers, debit card numbers, online banking login details, etc. on the internet, on the cloud, on a personal computer, on a handheld device, cash register etc. using various input devices such as keyboard, mouse, touchpad, biometric capturing devices etc. Security of the user's personal details is becoming a growing concern as the details may be hacked using various hardware and software techniques. For example, key logging devices or software can be linked to the keyboard, or placed within a cable or computer itself which can track and log keystrokes using which user's personal details can be extracted. Further, dedicated programs written in high level languages like C, Basic, etc. can also be designed to track and log keystrokes. Additionally, while carrying out transactions via an electronic data capture device such as an automatic teller machine, and a point of sale terminal at a merchant's location, personal details of the user can be compromised.

Further, in a transaction lifecycle, for example, an ecommerce transaction lifecycle, conventional authentication procedures restricted to just payment transactions does not provide complete authentication of all the steps involved in the transaction lifecycle such as pre-payment stage, payment stage and post payment logistical transactions. Moreover, authentication of user/ merchant himself as the rightful person is important before any transaction is carried out. Therefore, in addition to secure transaction authentication process, secure user identification and complete authentication of transaction process is call of the day. Further, Internet Protocol (IP) address fraud is quite prevalent where the user can fake his location and make a transaction on the other side of the world without any trace. Additionally, money laundering is a common problem in the market where there is no track of the hands that the money has exchanged since there is no identity attached to signed transactions.

In light of the abovementioned disadvantages, there is a need for a method and system for securely and efficiently authenticating a user's electronic transaction. There is a need for a method and system for carrying out electronic transactions without the user requiring to enter personal details using an input device. Also, there is a need for secure user identification and user location based authentication of those electronic transactions. Additionally, there is a need for a method and system for providing secure end-to-end authentication and signing during the complete transaction lifecycle.

### Summary of the invention

In an embodiment of the present invention, a method for performing secure end-to-end authentication of an electronic transaction initiated by a user using a user device is provided. The method is performed via program instructions stored in at least one memory and executed by at least one processor. The method comprises generating, via a first processor, at least one secret element comprising encrypted payload data. The payload data is encrypted using at least two cryptographic keys. The at least one secret element is transmitted to the user device. Further, the method comprises analyzing, via a second processor, an image of the at least one secret element by an authentication device. The image of the at least one secret element is captured by the authentication device by scanning the at least one secret element displayed on the user device. The image of the at least one secret element is analyzed to extract the payload data by decrypting the payload data using at least two cryptographic keys. Furthermore, the method comprises determining, via the first processor, geo-location of the user device and the authentication device if the extracted payload data is associated with a unique Uniform Resource Locator (URL) including a string. The method further comprises accessing, via the second processor, a secure page on the authentication device, using the unique URL including the string associated with the payload data based on the determination. Further, the method comprises processing, via the first processor, the transaction after verification of the transaction details on the secure page accessed on the authentication device. Finally, the method comprises transmitting, via the first processor, a transaction confirmation to at least the user device and the authentication device.

In another embodiment of the present invention, a system for performing secure end-to-end authentication of an electronic transaction initiated by a user using a user device is provided. The system comprises a transaction authentication server in communication with a first processor and configured to generate at least one secret element comprising encrypted payload data. The payload data is encrypted using at least two cryptographic keys. The at least one secret element is transmitted to the user device. The system further comprises an authentication device in communication with a second processor and configured to analyze an image of the at least one secret element. The image of the at least one secret element is captured by the authentication device from the user device. The image of the at least on secret element is analyzed to extract the payload data by decrypting the payload data using at least two cryptographic keys. Further, the system comprises an acquisition server in communication with a third processor and configured to facilitate exchanging data between the transaction authentication server and the authentication device, wherein if the extracted payload data is associated with a unique Uniform Resource Locator (URL) including a string, the transaction authentication server is configured to determine geo-location of the user device and the authentication device and display a secure page on the authentication device based on the determination. The transaction is processed by the transaction authentication server via the authentication device after verification of the transaction details on the secure page.

In another embodiment of the present invention, a transaction authentication server for performing secure end-to-end authentication of an electronic transaction via an authentication device is provided. The electronic transaction is initiated by a user using a user device. The transaction authentication server comprises a secret element generating unit in communication with a processor and configured to generate at least one secret element comprising encrypted payload data. The payload data is encrypted using at least two cryptographic keys. The at least one secret element is transmitted to the user device.

In yet another embodiment of the present invention, an authentication device for performing secure end-to-end authentication of an electronic transaction via a transaction authentication server is provided. The electronic transaction is initiated by a user using a user device. The authentication device comprises an authentication unit in communication with a processor and configured to analyze an image of at least one secret element comprising encrypted payload data. The image of the at least one secret element is captured by the authentication device from the user device. The at least one secret element is transmitted to the user device by the transaction authentication server. The image of the at least on secret element is analyzed to extract the payload data by decrypting the payload data using at least two cryptographic keys.

### Brief description of the accompanying drawings

The present invention is described by way of embodiments illustrated in the accompanying drawings wherein:

FIG.1 is a block diagram of a system for providing secure end-to-end authentication of electronic transactions, in accordance with an embodiment of the present invention;

FIG. 2 is a flowchart of a method for providing secure end-to-end authentication of electronic transactions, in accordance with an embodiment of the present invention; and

FIG. 3 illustrates an exemplary computer system in which various embodiments of the present invention may be implemented.

### Detailed description of the invention

A system and method for carrying out secure end-to-end authentication of an electronic transaction is provided. The invention provides for securing an electronic transaction (e.g. online shopping transactions) via a wireless communication device such as a mobile phone. The mobile phone of the user is registered with a trusted identity provider which may include, but is not limited to, user's bank(s), financial institutions, verification parties such as large merchants, utility companies and mobile network operators which is authorized to be used for securely signing an electronic transaction. Further, the invention provides for carrying out online transactions with minimum user intervention and without the user requiring to enter sensitive user details or share sensitive details with a third-party such as a merchant.

The disclosure is provided in order to enable a person having ordinary skill in the art to practice the invention. Exemplary embodiments herein are provided only for illustrative purposes and various modifications will be readily apparent to persons skilled in the art. The general principles defined herein may be applied to other embodiments and applications without departing from the spirit and scope of the invention. The terminology and phraseology used herein is for the purpose of describing exemplary embodiments and should not be considered limiting. Thus, the present invention is to be accorded the widest scope encompassing numerous alternatives, modifications and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

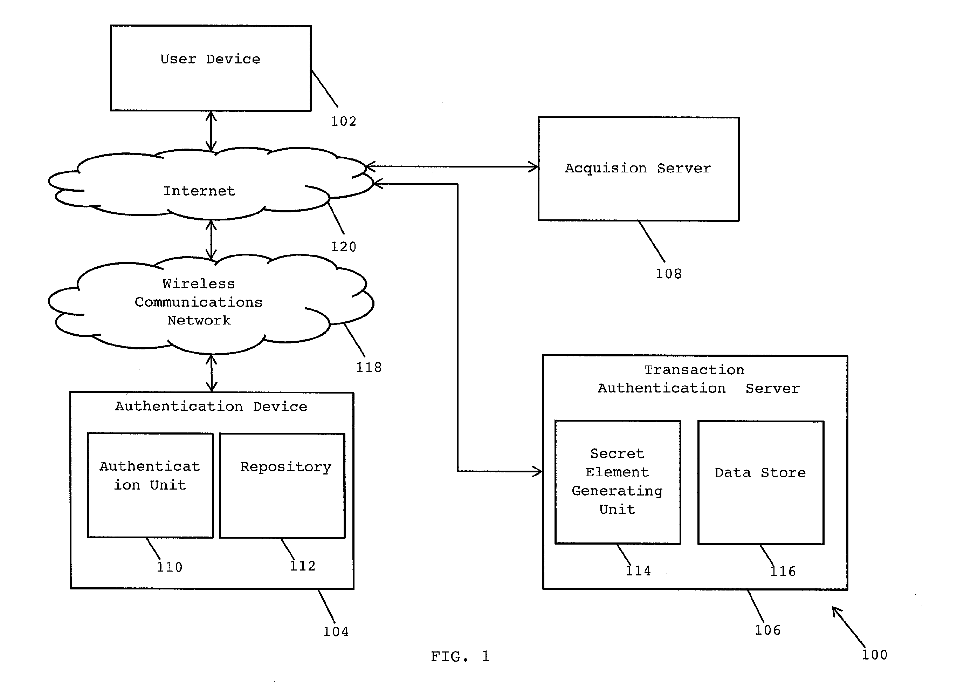

FIG. 1 is a block diagram of a system for providing secure end-to-end authentication of electronic transactions, in accordance with various embodiments of the present invention. The system 100 comprises a user device 102, an authentication device 104, a transaction authentication server 106 and an acquisition server 108.

In an embodiment of the present invention, the user device 102 facilitates a user to initiate and carry out various electronic transactions. In an exemplary embodiment of the present invention, the electronic transactions may include an ecommerce transaction of products and services by accessing a merchant's website. Examples of the user device 102 may include, but is not limited to, a personal computer, a laptop, a personal digital assistant, a mobile communications device, a smart phone and any other internet enabled device. In another exemplary embodiment of the present invention, the user device 102 may include an electronic data capture device which facilitates a user to carry out only payment transactions or an ecommerce transaction which involves payment transactions. Examples of electronic data capture device may include, but is not limited to, an automatic teller machine and a point of sale terminal at a merchant's location.

The electronic transaction process initiated by the user via the user device 102 is securely authenticated via the authentication device 104, and the transaction authentication server 106 before completing the transaction. In an exemplary embodiment of the present invention, the authentication device 104 may include a personal handheld device of the user i.e. a mobile phone or any other wireless communication device. The authentication device 104 is a digitally signed device and its unique identity (e.g. Mobile Station International Subscriber Directory Number (MSISDN)) may be registered with one or more identity providers which may include, but is not limited to, financial institutions, banks, utility companies, mobile network operators, merchants, and government organizations. The authentication device 104 comprises an authentication unit 110, and a repository 112. Further, the authentication device 104 may comprise a Global Positioning System (GPS)(not shown), using which location of the authentication device 104 can be ascertained. Alternately, the location information of the authentication device 104 may be obtained from mobile network operator of the authentication device 104 (i.e. from Home Location Register (HLR) or Visitor location Register (VLR) in case of a Global System for Mobile Communications (GSM) wireless communication network). Further, the location information may be obtained from coarse location calculated by triangulation of at least three Wireless Fidelity (Wifi) stations. The authentication unit 110 and the repository 112 operate in conjunction with a processor (not shown) within the authentication device 104 which is coupled to a memory (not shown) that stores program instructions using which the processor (not shown) executes the functionalities of the authentication unit 110 and the repository 112.

As shown in FIG. 1, a wireless communications network 118 connects the authentication device 104 to the internet 120 for carrying out the electronic transaction authentication process between the user device 102, the transaction authentication server 106 and the acquisition server 108. In an embodiment of the present invention, the acquisition server 108 may include, but is not limited to, a merchant server, a bank server, a payment service provider server, a payment method server or any such party that requests for authenticating a user transaction which passes through their system. The transaction authentication server 106 operates in communication with the authentication device 104 to carry out the electronic transaction authentication process. The transaction authentication server 106 comprises a secret element generating unit 114 and a data store 116. The secret element generating unit 114 generates one or more secret elements, cryptographic keys and one or more random numbers to carry out the electronic transaction authentication process. In an exemplary embodiment of the present invention, the one or more secret elements are optically coded machine-scannable codes with payload data encoded in it for carrying out the transaction authentication process. The secret element generating unit 114 and the data store 116 operate in conjunction with a processor (not shown) within the transaction authentication server 106 which is coupled to a memory (not shown) that stores program instructions using which the processor (not shown) executes the functionalities of the secret element generating unit 114 and the data store 116.

In an embodiment of the present invention, the initial phase of the electronic transaction authentication process includes registering the user using a registration secret element which is generated by the secret element generating unit 114 using one or more details, generating cryptographic keys and generating one or more random numbers (This will be explained in detail in the later sections of the specification). The second phase of the electronic transaction authentication process includes secure authentication of the identity of the authentication device 104 and the user using an identification secret element which is generated by the secret element generating unit 114 using one or more details, generating cryptographic keys and random numbers (This will be explained in detail in the later sections of the specification). The third phase of the electronic transaction authentication process includes secure authentication of the complete transaction of the products/services using a transaction secret element which is generated by the secret element generating unit 114 using one or more details, and generating cryptographic keys (This will be explained in detail in the later sections of the specification).

### Secret element generation for registration, identification and transaction authentication process.

In an embodiment of the present invention, during the registration phase, the user accesses a website or an application page for registering with the transaction authentication process via the user device 102. The website is hosted by the transaction authentication server 106. The transaction authentication server 106 receives one or more details from the user device 102, and the authentication device 104. The one or more details may include various identification details of the user such as mobile phone identity, internet identity, national identity, financial identity and social identity. The mobile identity may include, but is not limited to, MSISDN, Media Access Control Identification (MACID), International Mobile Subscriber Identity (IMSI), International Mobile Equipment Identity (IMEI), mobile phone type etc. Internet identity may include, but is not limited to, email address of the user, Internet protocol (IP) address of the user device 102 etc. Financial identity may include, but is not limited to, bank account number of the user such as International Bank Account Number (IBAN), Basic Bank Account Number (BBAN), Bank Identifier Codes (BIC) and PayPal address.

The secret element generating unit 114 in the transaction authentication server 106 is configured to generate the registration secret element using the one or more details. The registration secret element includes payload data related to registration for the electronic transaction authentication process. In an exemplary embodiment of the present invention, the registration secret element is an optical code such as a Quick Response (QR) code (referred as registration QR code). The registration QR code is a two dimensional optical bar code which has the payload data encoded into it. In this embodiment, the registration QR code comprises a series of small square message blocks, and the payload data is encoded through a variation of grey levels of bright and dark message blocks. Further, the payload data is encrypted with a first cryptographic key (FCK) stored in the data store 116. The FCK is an application specific cryptographic key used for encrypting the content of the one or more secret elements such that the one or more secret elements are unreadable by any other application or systems. In an embodiment of the present invention, the format of the FCK i.e. size, characteristics is in compliance with one or more known secure cryptographic algorithms used for encrypting the one or more secret element.

Furthermore, the secret element generating unit 114 generates an activation code which forms a part of the payload data. The activation code is a one time code comprising a character string, a numeric string or an alphanumeric string for facilitating the user to activate the authentication unit 110 in the authentication device 102. The activation code is encrypted with a registration encryption key using geo-location information of the user device 102. The geo-location information includes latitude, longitude information of the user device 102, which is obtained from the IP address of the user device 102. In an exemplary embodiment of the present invention, the registration encryption key is obtained by applying a registration key derivation function which may be obtained from location information of all the devices within a specific zone such that location information of all the devices within the specific zone map to same registration encryption key. For example, based on the IP address of the user device 102, if latitude 34 degree and longitude 89 degree is obtained, then the registration key derivation maps this to approximate zone center which may be 35 degrees latitude and 95 degrees longitude. If, for example, the location information of the authentication device 104 is 32.4 degrees latitude and 92 degrees longitude, the registration key derivation would derive the approximate figures of 35 and 95 degrees for latitude and longitude.

The registration secret element is sent to the user device 102 which is received and displayed on a web page or an application page in the user device 102. The authentication device 104 captures an image of the registration secret element. In an embodiment of the present invention, the authentication device 104 captures an image of the registration secret element when the user scans the registration secret element using an image capturing unit (not shown) in the authentication device 104. In another embodiment of the present invention, the authentication device 104 captures an image of the registration secret element by tapping on the image of the registration secret element on the user device which may include, but is not limited to, using near field communication and clicking on the screen of the user device.

The authentication unit 110 decrypts the registration secret element with the first cryptographic key (FCK) to extract the encrypted activation code from the payload data. Further, the authentication unit 110 decrypts the encrypted activation code using a registration key to extract the activation code. The authentication unit 110 generates the registration key using latitude, longitude information of the authentication device 104 which is obtained from the mobile network operator (i.e. HLR/VLR in case of GSM wireless communication network) or from the GPS of the authentication device 104 or from the operating system of the authentication device 104. Based on the latitude, longitude information of the authentication device 104 if it is found to be present in a location outside a specific zone of the user device 102, the decryption will not be successful.

The authentication unit 110 then displays the activation code on the user interface screen (not shown) of the authentication device 104 and sends the activation code to the transaction authentication server 106 using, for example, an Out of Bounds Channel for authorization to use the transaction authentication process. Further, the authentication device 104 prompts the user to select and confirm a secret PIN on the user interface screen (not shown) of the authentication device 104. The PIN can be used for accessing the authentication unit 110 on the authentication device 104. The registration is complete on successful validation of the activation code by transaction authentication server 106 and then the user is deemed registered and can start using the authentication device 104 for any authentication transaction process using the PIN.

Furthermore, at the registration phase, the authentication unit 110 generates a user specific private key and public key pair for signing an electronic transaction when the user carries out the electronic transaction. The user specific private key is encrypted and stored in the repository 112. In an embodiment of the present invention, the user specific private key is encrypted using a Key Protection Key (KPK). The KPK is obtained by applying a key derivation function to the parameters, including, but not limited to, a unique identification of the authentication device 104, a unique identification of the user which is known to him and a cryptographic salt. The cryptographic salt is a user specific securely generated random number which is generated at the authentication device 104 and stored in the repository 112. In an exemplary embodiment of the present invention, the unique identification of the authentication device 104 may include, but not limited to, MACID of the authentication device 104. MACID is a unique physical address of the authentication device 104 for carrying out communications in the wireless communication network. Further, the unique identification of the user which is known to him may include a secure hash function of the PIN which may be generated using advanced one way function.

Further, the public key, hash of PIN, and the cryptographic salt are encrypted using the first cryptographic key (FCK) to generate the encrypted payload, which is sent to the transaction authentication server 106. The encrypted public key and the cryptographic salt are decrypted at the transaction authentication server 106 and stored in the data store 116.

In another embodiment of the present invention, the secret element generating unit 114 is configured to generate an identification secret element for uniquely identifying the authentication device 104 and the user prior to the electronic transaction process. In an exemplary embodiment of the present invention, the identification secret element is an identification QR code. The identification secret element includes payload data related to identification of the user for the electronic transaction authentication process. The payload data may include a requestor identification which indicates, for example, the transaction website which is to be authenticated. In addition, the payload data includes a random sequence number which is encrypted with a geo encryption key based on the IP of the user device 102. The geo encryption key is obtained by applying a key derivation function to the IP address of the user device 102. Further, the payload data is encrypted with the first cryptographic key (FCK) which is retrieved from the data store 116. The identification secret element containing the payload data is sent to the user device 102 which is received and displayed on a web page or application page in the user device 102. The authentication device 104 captures an image of the identification secret element when the user scans the identification secret element using the image capturing unit (not shown) in the authentication device 104 or by tapping on the image of the identification secret element on the user device 102 page. The authentication unit 110 decrypts the identification secret element with the first cryptographic key (FCK) and the geo encryption key to extract the random sequence number from the payload data. Further, the authentication unit 110 prompts the user to enter the PIN (as discussed with respect to the registration phase) which is validated at the transaction authentication server 106. Furthermore, the random sequence number is encrypted with the user specific private key, which is retrieved from the repository 112.

The encrypted random sequence number, installation identification of the authentication unit 110 and the hash of PIN are sent to the transaction authentication server 106. The public key is retrieved from the data store 116 (as discussed with respect to the registration phase) and the random sequence number is decrypted using the public key for completing the identification verification process of the authentication device 104. Thereafter, user identification details which may include, but not limited to, MSISDN and email address along with the requestor ID are sent to the acquisition server 108.

In an embodiment of the present invention, at the transaction phase the secret element generating unit 114 is configured to generate a transaction secret element for securely carrying out authentication of the transaction process. In an exemplary embodiment of the present invention, the transaction secret element is a transaction QR code. Further, the transaction secret element includes payload data related to transaction details of the electronic transaction received from the user device 102, which may include, but not limited to, IP address of the user device 102, MSISDN, previous transaction ID and current transaction details such as transaction ID, amount, merchant ID, etc and a transaction random sequence number. The transaction random sequence number is encrypted with a transaction encryption key which is derived from geo-location information of the user device 102. The geo-location information includes latitude, longitude information of the user device 102 which is obtained from the I P address of the user device 102. Furthermore, the transaction encryption key is obtained as a transaction key derivation function derived from the geo-location information of the personal computer. Further, the user public key is retrieved from the data store 116 and the payload data is encrypted with the user public key. Furthermore, a Transaction Personal Identification Number (TPIN) is generated and sent to the authentication device 104.

The transaction secret element is sent to the user device 102 which is received and displayed on a web page or application page in the user device 102. The authentication device 104 captures an image of the transaction secret element when the user scans the transaction secret element using the image capturing unit (not shown) in the authentication device 104 or by tapping on the image of the transaction secret element on the user device 102 page.

The authentication unit 110 derives the KPK using Key Derivation function as discussed previously in conjunction with the registration phase. The KPK is then used to decrypt the user specific private key stored in the repository 112. The transaction secret element is decrypted with the user specific private key to extract the encrypted transaction payload. Further, the encrypted transaction random sequence number is decrypted with transaction encryption key. The transaction encryption key is derived at the authentication device 104 using the authentication device's geo-location information which is obtained from the global positioning system of the authentication device 104 or from mobile network operator (i.e. HLR/VLR in case of a GSM network)or from wifi signal triangulation. Furthermore, the authentication unit 110 prompts the user to enter the PIN (as discussed with respect to the registration phase) which is validated at the transaction authentication server 106. After validation, the authentication unit 110 generates a Transaction Signature using the user specific private key for digitally signing the transaction. Further, the transaction random sequence number, and transaction signature is signed with a signing key. The signing key is a random key derivation function. The signing key, transaction random sequence number, transaction details and transaction signature are encrypted using user specific private key and sent to the transaction authentication server 106. In the transaction authentication server 106, the public key is retrieved from the data store 116 and used to decrypt the signing key, transaction random sequence number, transaction details and the transaction signature. The decrypted details are validated and the transaction authentication is confirmed to the user and the acquisition server 108.

### Electronic transaction using transaction secret element

In an embodiment of the present invention, during the transaction phase, the user accesses a merchant's online shopping website via a web browser (not shown) in the personal computer (i.e. user device 102) for purchasing a product or service. The merchant or the requestor provides transaction details such as "order number of the product", "payment amount", "currency code" and "merchant number". In this embodiment, the acquisition server 108 may be a merchant server which hosts the shopping website or a PSP hosting a check out page. The merchant server sends a request to the transaction authentication server 106 to initiate the transaction authentication process. The transaction authentication server 106 fetches the transaction details from the merchant server and generates a transaction secret element. The transaction secret element includes encrypted payload data encoded in it. The payload data is encrypted with cryptographic keys. The cryptographic keys are generated in the transaction authentication server 106 using one or more details (as discussed in conjunction with the registration phase and transaction phase). In an exemplary embodiment of the present invention, the transaction authentication server 106 generates a unique Uniform Resource locator (URL) including a string associated with the payload data, and encodes it into the transaction secret element. The URL including the string facilitates to invoke an application in the authentication device 104. The transaction secret element is sent to the personal computer via the merchant server and displayed within the web page content of the online shopping website. The user enters a PIN to activate the authentication unit 110 in the authentication device 104. As discussed previously, the PIN is selected by the user at the registration phase for authorizing the user to access the authentication unit 110 and use the transaction authentication process. The authentication device 104 captures an image of the displayed transaction secret element via the image capturing unit (not shown), when the user scans the transaction secret element using the authentication device 104 or when the user taps the image on the personal computer. The image capturing unit (not shown) may include an optical scanner, camera and any other scanning device. The transaction details encoded in the transaction secret element are displayed on the user interface screen (not shown) of the authentication device 104. The authentication device 104 prompts the user to enter the TPIN which is validated at the transaction authentication server 106. As discussed previously, the TPIN is configured by the user for authorizing the user to sign the transaction. Alternatively, the transaction authentication server 106 sends a one-time password to the authentication device 104 and the user is prompted to enter the one-time password through a second channel such as Short Message Service (SMS). After, receiving the one-time password, the transaction authentication server 106 checks the location of the personal computer and the authentication device 104 to confirm that both the devices are at a specific location (as discussed in conjunction with the above mentioned paragraphs). After the location confirmation, the transaction authentication process is completed. In another embodiment of the present invention, t h e authentication device 104 allows the user to access a secure page by clicking on the URL retrieved from the transaction secret element. The secure page shows a shopping cart associated with the requested shopping transaction. The transaction authentication server 106 hosts the secure page as a shared service with the merchant server. The user validates the shopping cart and proceeds with the payment transaction. The transaction authentication server 106 retrieves the user's payment transaction details, i.e. credit card details from the user's bank where he holds an account. The transaction authentication server 106 sends the payment transaction details to the user's authentication device 104 which is rendered on the user interface screen (not shown) of the authentication device 104. After, the payment transaction details are confirmed by the user via the authentication device 104, the payment is processed by the bank. The payment transaction is completed and a transaction confirmation message is sent by the transaction authentication server 106 to the authentication device 104, user device 102 and the merchant server. Similarly, the transaction can be carried out when the user device 102 is a point of sale terminal at a merchant's location.

In another embodiment of the present invention, in case the user device 102 is an automatic teller machine, for payment transaction, the user enters payment amount and MSISDN number of the authentication device 104 in the automatic teller machine. The acquisition server 108 retrieves the payment amount and MSISDN from the automatic teller machine and sends a request to the transaction authentication server 106 to initiate the transaction authentication process. The transaction authentication server 106 retrieves the payment amount and MSISDN from the acquisition server 108. The transaction authentication server 106 then generates a transaction secret element. The transaction secret element includes encrypted payload data encoded in it. The payload data is encrypted with cryptographic keys. The cryptographic keys are generated in the transaction authentication server 106 using one or more details (as discussed in conjunction with the registration phase and transaction phase). In an exemplary embodiment of the present invention, the transaction authentication server 106 generates a unique URL including a string associated with the payload data, and encodes it into the transaction secret element. The URL facilitates to invoke an application on the authentication device 104. The transaction secret element is sent to the automatic teller machine via the acquisition server 108 and displayed in a user interface screen (not shown) of the automatic teller machine. The user enters a PIN to activate the authentication unit 110 in the authentication device 104. The PIN is selected by the user at the registration phase for authorizing the user to access the authentication unit 110 and use the transaction authentication process (as discussed in conjunction with the above mentioned paragraphs). The authentication device 104 captures an image of the displayed transaction secret element via an image capturing unit (not shown), when the user scans the transaction secret element using the authentication device 104 or taps the image of the transaction secret element displayed on the personal computer. Subsequently, the user is allowed to access a secure page via the authentication device 104 by clicking on the URL showing a payment transaction page, which is hosted by the transaction authentication server 106. The payment transaction page prompts the user to select the bank where the user holds an account. After selection, the authentication device 104 prompts the user to enter a TPIN which is validated at the transaction authentication server 106. The TPIN is configured by the user for authorizing the user to sign the transaction (as discussed in conjunction with the transaction phase). Alternately, the transaction authentication server 106 sends a one-time password to the authentication device 104 and the user is prompted to enter the one-time password. After, receiving the one-time password, the transaction authentication server 106 checks the location of the automatic teller machine and the authentication device 104 to confirm that both the devices are at a specific location (as discussed with respect to the above mentioned paragraphs). After the location confirmation, the transaction authentication process is completed. The payment is then processed by the bank and the user is allowed to withdraw money. A transaction confirmation message is sent to the automatic teller machine and displayed on the user interface screen (not shown) of the automatic teller machine. Transaction confirmation message may also be displayed on the user interface (not shown) screen of the authentication device 104 and/or the acquisition server 108.

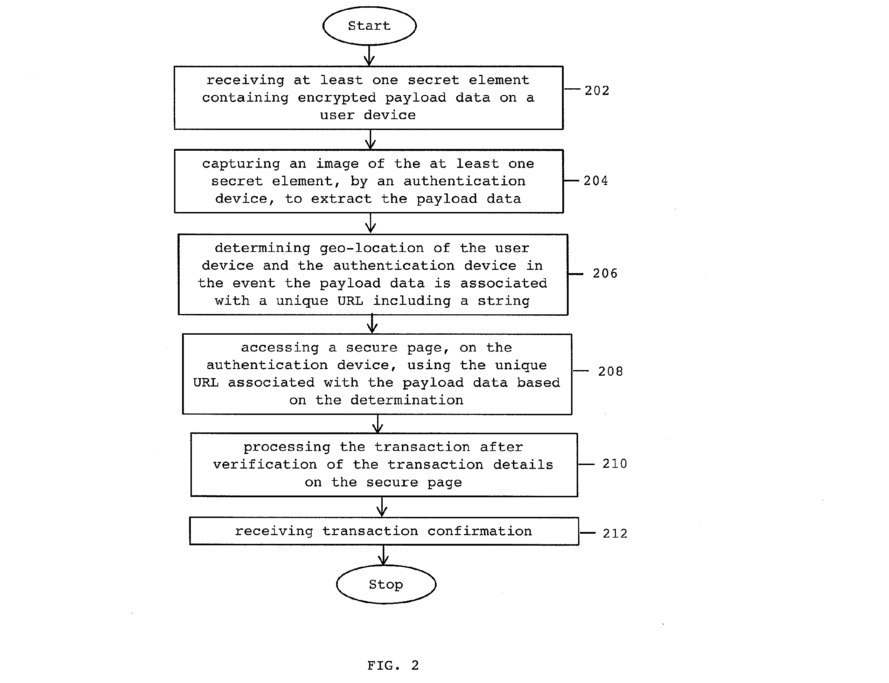

FIG. 2 is a flowchart of a method for providing secure end-to-end authentication of electronic transactions, in accordance with an embodiment of the present invention.

At step 202, at least one secret element containing encrypted payload data is received on a user device. In an embodiment of the present invention, the at least one secret element includes a registration secret element which is generated for securely registering the user with the transaction authentication process (as discussed in conjunction with FIG. 1). In another embodiment of the present invention, the at least one secret element includes an identification secret element which is generated for securely identifying the authentication device and the user prior to carrying out an electronic transaction (e.g. online shopping transaction or a payment withdrawal transaction) as discussed in conjunction with the FIG. 1. In yet another embodiment of the present invention, the at least one secret element includes a transaction secret element for securely carrying out the electronic transaction (as discussed in conjunction with the FIG. 1). The registration secret element, identification secret element and the transaction secret element include payload data encrypted using cryptographic keys. The cryptographic keys are generated using various details obtained from the user device and the authentication device (as discussed in conjunction with the FIG. 1).

At step 204, an image of the at least one secret element is captured, by an authentication device, to extract the payload data. In an embodiment of the present invention, the image of the at least one secret element is captured by scanning the at least one secret element using an image capturing unit in the authentication device or by tapping the image of the secret element on the user device page. In an embodiment of the present invention, the captured images of the registration secret element and identification secret element are decrypted using respective cryptographic keys to extract the payload data and complete the registration and identification authentication processes (as discussed in conjunction with the FIG. 1). In another embodiment of the present invention, the captured image of the transaction secret element is decrypted using associated cryptographic keys to extract various details including a unique URL including a string for signing a transaction.

At step 206, geo-location of the user device and the authentication device is determined in the event the payload data is associated with a unique URL including a string. In an embodiment of the preset invention, geo-location information of the user device includes latitude, longitude information of the user device, which is obtained from IP address of the user. Further, geo-location information of the authentication device includes latitude, longitude information of the authentication device which is obtained from the global positioning system of the authentication device 104. Alternately, and latitude, longitude information of the authentication device is obtained from the mobile network operator (i.e. HLR/VLR in case of GSM wireless communication network) or from the operating system through wifi signal triangulation. After, retrieving the geo-location information of the user device and the authentication device, it is determined if the user device and the authentication are at a the same coarse location.

At step 208, a secure page is accessed on the authentication device using a unique Uniform Resource Locator (URL) associated with the payload data based on the determination. In an embodiment of the present invention, if it is determined that the user device and the authentication device are at the same coarse location, the user is allowed to access a secure page by clicking on the secure unique URL. In an embodiment of the present invention, the secure page is hosted by a transaction authentication server which has a shared service with a merchant server in case of an online shopping transaction (as discussed in conjunction with FIG.1). In another embodiment of the present invention, the secure page is hosted by the transaction authentication server which has a shared service with user's bank (as discussed in conjunction with FIG.1).

At step 210, the transaction is processed after verification of the transaction details on the secure page. In an embodiment of the present invention, after the user verifies and confirms the transaction details related to a shopping basket displayed in the secure page, the transaction is processed. For processing payment transaction related to shopping, the user receives credit card details and amount for confirmation and the payment amount is directly debited from the user's bank account (as discussed in conjunction with FIG.1). In another embodiment of the present invention, after the user verifies and confirms the transaction details related to a payment withdrawal displayed in the secure page, the transaction is processed and payment amount is directly debited from the user's bank account (as discussed in conjunction with FIG.1)

At step 212, transaction confirmation is received. In an embodiment of the present invention, the transaction is completed and transaction confirmation message is displayed on a user interface screen of at least the user device and the authentication device.

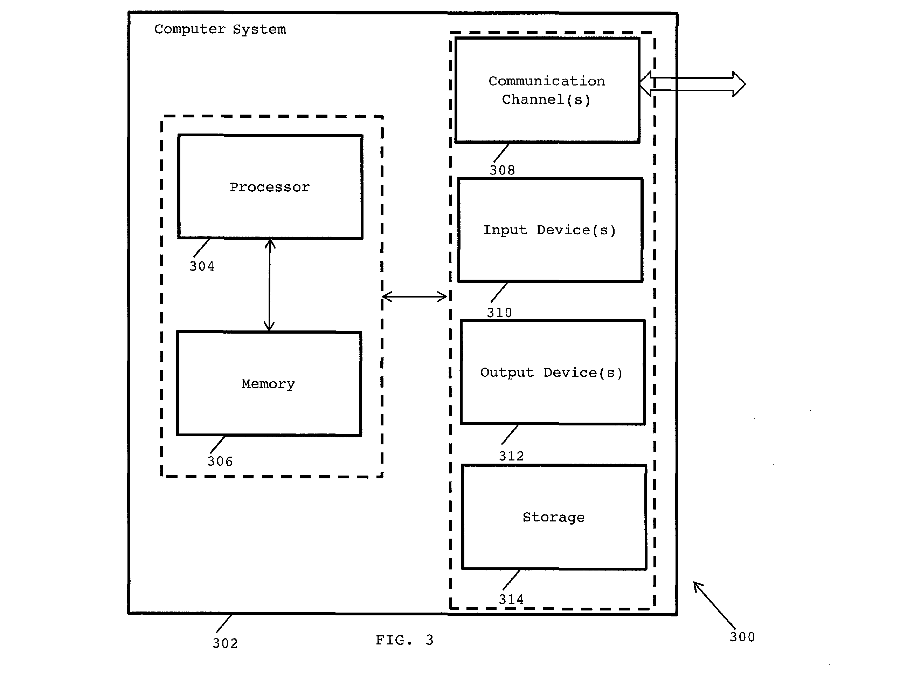

FIG. 3 illustrates an exemplary computer system in which various embodiments of the present invention may be implemented.

The computer system 302 comprises a processor 304 and a memory 306. The processor 304 executes program instructions and may be a real processor. The processor 304 may also be a virtual processor. The computer system 302 is not intended to suggest any limitation as to scope of use or functionality of described embodiments. For example, the computer system 302 may include, but not limited to, a general-purpose computer, a programmed microprocessor, a micro-controller, a peripheral integrated circuit element, and other devices or arrangements of devices that are capable of implementing the steps that constitute the method of the present invention. In an embodiment of the present invention, the memory 306 may store software for implementing various embodiments of the present invention. The computer system 302 may have additional components. For example, the computer system 302 includes one or more communication channels 308, one or more input devices 310, one or more output devices 312, and storage 314. An interconnection mechanism (not shown) such as a bus, controller, or network, interconnects the components of the computer system 302. In various embodiments of the present invention, operating system software (not shown) provides an operating environment for various softwares executing in the computer system 302, and manages different functionalities of the components of the computer system 302.

The communication channel(s) 308 allow communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, bluetooth or other transmission media.

The input device(s) 310 may include, but not limited to, a keyboard, mouse, pen, joystick, trackball, a voice device, a scanning device, or any another device that is capable of providing input to the computer system 302. In an embodiment of the present invention, the input device(s) 310 may be a sound card or similar device that accepts audio input in analog or digital form or an image capturing unit. The output device(s) 312 may include, but not limited to, a user interface on CRT or LCD, printer, speaker, CD/DVD writer, or any other device that provides output from the computer system 302.

The storage 314 may include, but not limited to, magnetic disks, magnetic tapes, CD-ROMs, CD-RWs, DVDs, flash drives or any other medium which can be used to store information and can be accessed by the computer system 302. In various embodiments of the present invention, the storage 314 contains program instructions for implementing the described embodiments.

In an embodiment of the present invention, the computer system 302 is part of a distributed network where various embodiments of the present invention are implemented for rapidly developing end-to-end software applications.

The present invention may be implemented in numerous ways including as a system, a method, or a computer program product such as a computer readable storage medium or a computer network wherein programming instructions are communicated from a remote location.

The present invention may suitably be embodied as a computer program product for use with the computer system 302. The method described herein is typically implemented as a computer program product, comprising a set of program instructions which is executed by the computer system 302 or any other similar device. The set of program instructions may be a series of computer readable codes stored on a tangible medium, such as a computer readable storage medium (storage 314), for example, diskette, CD-ROM, ROM, flash drives or hard disk, or transmittable to the computer system 302, via a modem or other interface device, over either a tangible medium, including but not limited to optical or analogue communications channel(s) 308. The implementation of the invention as a computer program product may be in an intangible form using wireless techniques, including but not limited to microwave, infrared, bluetooth or other transmission techniques. These instructions can be preloaded into a system or recorded on a storage medium such as a CD-ROM, or made available for downloading over a network such as the internet or a mobile telephone network. The series of computer readable instructions may embody all or part of the functionality previously described herein.

While the exemplary embodiments of the present invention are described and illustrated herein, it will be appreciated that they are merely illustrative. It will be understood by those skilled in the art that various modifications in form and detail may be made therein without departing from or offending the spirit and scope of the invention as defined by the appended claims.

## Claims

1. A method for performing secure end-to-end authentication of an electronic transaction initiated by a user using a user device, wherein the method is performed via program instructions stored in at least one memory and executed by at least one processor, the method comprising:
generating, via a first processor, at least one secret element comprising encrypted payload data, the payload data being encrypted using at least two cryptographic keys, wherein the at least one secret element is transmitted to the user device;
analyzing, via a second processor, an image of the at least one secret element by an authentication device,
the image of the at least one secret element being captured by the authentication device by scanning the at least one secret element displayed on the user device, wherein the image of the at least one secret element is analyzed to extract the payload data by decrypting the payload data using at least two cryptographic keys;
determining, via the first processor, geo-location of the user device and the authentication device if the extracted payload data is associated with a unique Uniform Resource Locator (URL) including a string;
accessing, via the second processor, a secure page on the authentication device, using the unique URL including the string associated with the payload data based on the determination;
processing, via the first processor, the transaction after verification of the transaction details on the secure page accessed on the authentication device; and
transmitting, via the first processor, a transaction confirmation to at least the user device and the authentication device.

2. The method of claim 1, wherein the at least one secret element is a two dimensional optical bar code, and wherein the two dimensional optical bar code is a quick response code.

3. The method of claim 1, wherein generating the at least one secret element comprising encrypted payload data, the payload data being encrypted using at least two cryptographic keys comprises:
generating a registration secret element for registering the user with the transaction authentication process, the registration secret element comprising payload data, the payload data comprising registration details and the activation code;
encrypting the activation code with a registration encryption key, the registration encryption key being obtained using geo-location information of the user device; and
encrypting the payload data with a first cryptographic key.

4. The method of claim 3, wherein analyzing the image of the at least one secret element to extract payload data by decrypting the encrypted payload data using at least two cryptographic keys comprises:
decrypting the payload data using the first cryptographic key to obtain at least the encrypted activation code; and
decrypting the encrypted activation code using the registration encryption key.

5. The method of claim 4 further comprises:
generating a user specific private key and a public key pair;
encrypting the user specific private key using a key protection key, wherein the key protection key is obtained by applying a key derivation function to the unique identification of the authentication device, a unique identification of the user which is known to the user and a cryptographic salt; and
encrypting the public key and the cryptographic salt using the first cryptographic key.

6. The method of claim 1, wherein generating the at least one secret element comprising encrypted payload data, the payload data being encrypted using at least two cryptographic keys comprises:
generating an identification secret element for identifying the authentication device and the user, the identification secret element comprising payload data,
the payload data comprising a requestor identification and a random sequence number;
encrypting the random sequence number with an geo encryption key, the geo encryption key being obtained by applying a key derivation function to the geo-location information of the user device; and
encrypting the payload data with a first cryptographic key.

7. The method of claim 6, wherein analyzing the image of the at least one secret element to extract payload data by decrypting the encrypted payload data using at least two cryptographic keys comprises:
decrypting the payload data using the first cryptographic key to obtain at least the requestor identification and the encrypted random sequence number; and
decrypting the encrypted random sequence number using the geo encryption key.

8. The method of claim 1, wherein generating the at least one secret element comprising encrypted payload data, the payload data being encrypted using at least two cryptographic keys comprises:
generating a transaction secret element for carrying out the electronic transaction, the transaction secret element comprising payload data, the payload data
comprising transaction details of the user and a transaction random sequence number;
encrypting the transaction random sequence number with a transaction encryption key, the transaction encryption key being obtained by applying a key derivation function on the geo-location information of the user device;
and
encrypting the payload data with a user public key.

9. The method of claim 8, wherein analyzing the image of the at least one secret element to extract payload data by decrypting the encrypted payload data using at least two cryptographic keys comprises:
decrypting the payload data using a user specific private key to obtain at least the encrypted transaction random sequence number; and
decrypting the encrypted transaction random sequence number using the transaction encryption key.

10. The method of claim 9 further comprises:
generating a transaction signature using the user specific private key for digitally signing the transaction; and
encrypting the transaction signature and the transaction random sequence number with a signing key.

11. The method of claim 10 further comprises decrypting the signing key with the user public key to obtain the transaction random sequence number, the transaction signature and the transaction details for validation.

12. A system for performing secure end-to-end authentication of an electronic transaction initiated by a user using a user device, the system comprising:
a transaction authentication server in communication with a first processor and configured to generate at least one secret element comprising encrypted payload data, the payload data being encrypted using at least two cryptographic keys, wherein the at least one secret element is transmitted to the user device;
an authentication device in communication with a second processor and configured to analyze an image of the at least one secret element, the image of the at least one secret element being captured by the authentication device from the user device, wherein the image of the at least on secret element is analyzed to extract the payload data by decrypting the payload data using at least two cryptographic keys; and
an acquisition server in communication with a third processor and configured to facilitate exchanging data between the transaction authentication server and the authentication device,
wherein if the extracted payload data is associated with a unique Uniform Resource Locator (URL) including a string, the transaction authentication server is configured to determine geo-location of the user device and the authentication device and display a secure page on the authentication device based on the determination, and wherein the transaction is processed via the authentication device after verification of the transaction details on the secure page.

13. The system of claim 12, wherein the authentication device comprises a repository for storing the at least two cryptographic keys for decrypting the encrypted payload data and further wherein the authentication device is a wireless communication device of the user, the wireless communication device being registered with one or more user's identity providers.

14. A transaction authentication server for performing secure end-to-end authentication of an electronic transaction via an authentication device, wherein the electronic transaction is initiated by a user using a user device, the transaction authentication server comprising:
a secret element generating unit in communication with a processor and configured to generate at least one secret element comprising encrypted payload data, the payload data being encrypted using at least two cryptographic keys, wherein the at least one secret element is transmitted to the user device.

15. The transaction authentication server of claim 14, wherein the secret element generating unit is configured to:
generate a registration secret element for registering the user with the transaction authentication process,
the registration secret element comprising payload data, the payload data comprising registration details,
and an activation code;
encrypt the activation code with a registration encryption key, the registration encryption key being obtained using geo-location information of the user device;
encrypt the payload data with a first cryptographic key;
generate an identification secret element for identifying the authentication device and the user, the identification secret element comprising payload data,
the payload data comprising a requestor identification and a random sequence number;
encrypt the random sequence number with a geo encryption key, the geo encryption key being obtained by applying a key derivation function on the geo-location information of the user device;
encrypt the payload data with the first cryptographic key;
generate a transaction secret element for carrying out the electronic transaction, the transaction secret element comprising payload data, the payload data comprising transaction details of the user, and a transaction random sequence number;
encrypt the transaction random sequence number with a transaction encryption key, the identification key being obtained by applying a key derivation function on the geo-location information of the user device; and
encrypt the payload data with a user public key.
